# EUROPEAN PATENT APPLICATION

(11) **EP 3 340 359 A1**
(43) Date of publication of application: **27.06.2018**
(21) Application number: 17206217.6
(22) Date of filing: 08.12.2017
(51) Int. Cl.: H01M 10/04, B30B 15/00, B30B 15/06, B32B 37/00

(54) **SEALING DEVICE FOR SECONDARY BATTERY**

(30) Priority: 22.12.2016 KR 20160177141
(71) Applicant: SK Innovation Co., Ltd., Seoul 03188 (KR)
(72) Inventor: KIM, Dong-Ju, 34124 Daejeon (KR); KIM, Sung Yeop, 34124 Daejeon (KR); KIM, Tae Il, 34124 Daejeon (KR)
(74) Representative: Stolmár & Partner Patentanwälte PartG mbB

(57) **Abstract**

A sealing device for a secondary battery includes a first pressing member on which a first sealing member covering a first surface of a secondary battery is disposed, a second pressing member on which a second sealing member covering a second surface of the secondary battery is disposed, and a gap adjusting member disposed on one or more of the first pressing member and the second pressing member and configured to adjust a distance between the first pressing member and the second pressing member.

## Description

### CROSS-REFERENCE TO RELATED APPLICATION(S)

This application claims benefit of priority to Korean Patent Application No. 10-2016-0177141 filed on December 22, 2016 in the Korean Intellectual Property Office, the disclosure of which is incorporated herein by reference in its entirety.

### BACKGROUND

### 1. FIELD

The present disclosure relates to a sealing device for a pouch-type secondary battery.

### 2. DESCRIPTION OF RELATED ART

Pouch-type secondary batteries are sealed by sealing members to prevent an electrolytic solution from leaking externally therefrom. Sealing operations of such secondary batteries are performed by pressing sealing members covering both surfaces of the secondary batteries together.

Since thicknesses of secondary batteries are variable, depending on the capacity and size of secondary batteries, the sealing operations of secondary batteries should be adjusted according to the types of secondary batteries. For example, in the related art, a member having a relatively thick thickness may be embedded in one side of a pressing member to adjust a pressing amount, based on the thickness of a secondary battery.

However, this method not only requires considerable operation time, also may not be able to finely adjust a pressing position based on various types of secondary batteries. For example, the related art method has difficulty in obtaining constant sealing qualities. Therefore, developing a sealing device capable of easily adjusting a pressing amount depending on the type of a secondary battery is required.

### SUMMARY

An aspect of the present disclosure is to provide a sealing device for a secondary battery, in which a pressing amount of or a space between pressing members may be easily adjusted.

According to an aspect of the present disclosure, a sealing device for a secondary battery includes a first pressing member on which a first sealing member covering a first surface of a secondary battery is disposed, a second pressing member on which a second sealing member covering a second surface of the secondary battery is disposed, and a gap adjusting member disposed on one or more of the first pressing member and the second pressing member and configured to adjust a distance between the first pressing member and the second pressing member.

The sealing device for a secondary battery may further include a first heating unit disposed on the first pressing member.

The sealing device for a secondary battery may further include a first heat insulating member disposed between the first pressing member and the first heating unit.

The sealing device for a secondary battery may further include a second heating unit disposed on the second pressing member.

The sealing device for a secondary battery may further include a second heat insulating member disposed between the second pressing member and the second heating unit.

The gap adjusting member may include a protrusion member configured to penetrate through the first pressing member to contact a surface of the second pressing member.

The protrusion member may have the form of a bolt to be engagedly combined with the first pressing member in a screw-fastened manner.

The gap adjusting member may further include a guide member penetrating through the second pressing member to guide relative movement of the second pressing member with respect to the first pressing member.

### BRIEF DESCRIPTION OF DRAWINGS

The above and other aspects, features, and advantages of the present disclosure will be more clearly understood from the following detailed description when taken in conjunction with the accompanying drawings, in which:
FIG. 1 is a configuration drawing of a sealing device for a secondary battery according to an exemplary embodiment in the present disclosure;
FIG. 2 is a diagram illustrating the use of the sealing device for a secondary battery illustrated in FIG. 1;
FIG. 3 is a configuration drawing of a sealing device for a secondary battery according to another exemplary embodiment in the present disclosure; and
FIG. 4 is a configuration drawing of a sealing device for a secondary battery according to another exemplary embodiment in the present disclosure.

### DETAILED DESCRIPTION

Hereinafter, embodiments of the present disclosure will be described as follows with reference to the attached drawings .

The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

Throughout the specification, it will be understood that when an element, such as a layer, region or wafer (substrate), is referred to as being "on," "connected to," or "coupled to" another element, it may be directly "on," "connected to," or "coupled to" the other element or other elements intervening therebetween may be present. In contrast, when an element is referred to as being "directly on, " "directly connected to, " or "directly coupled to" another element, there may be no elements or layers intervening therebetween. Like numerals refer to like elements throughout. As used herein, the term "and/or" includes any and all combinations of one or more of the associated listed items.

It will be apparent that though the terms first, second, third, etc. may be used herein to describe various members, components, regions, layers and/or sections, these members, components, regions, layers and/or sections should not be construed as being limited by these terms . These terms are only used to distinguish one member, component, region, layer or section from another region, layer or section. Thus, a first member, component, region, layer or section discussed below could be termed a second member, component, region, layer or section without departing from the teachings of the embodiments.

Spatially relative terms, such as "above," "upper," "below," and "lower" and the like, may be used herein for ease of description to describe one element's relationship to another element (s) as shown in the figures. It will be understood that the spatially relative terms are intended to encompass different orientations of the device in use or operation in addition to the orientation depicted in the figures . For example, if the device in the figures is turned over, elements described as "above," or "upper" other elements would then be oriented "below," or "lower" the other elements or features. Thus, the term "above" may encompass both upward and downward orientations, depending on a particular direction of the figures. The device may be otherwise oriented (rotated 90 degrees or at other orientations) and the spatially relative descriptors used herein may be interpreted accordingly.

The terminology used herein describes particular embodiments only, and the present disclosure is not limited thereby. As used herein, the singular forms "a, " "an, " and "the" are intended to include the plural forms as well, unless the context clearly indicates otherwise. It will be further understood that the terms "comprises, " and/or "comprising" when used in this specification, specify the presence of stated features, integers, steps, operations, members, elements, and/or groups thereof, but do not preclude the presence or addition of one or more other features, integers, steps, operations, members, elements, and/or groups thereof.

Hereinafter, embodiments of the present disclosure will be described with reference to schematic views illustrating embodiments of the present disclosure. In the drawings, for example, due to manufacturing techniques and/or tolerances, modifications of the shape shown may be estimated. Thus, embodiments of the present disclosure should not be construed as being limited to the particular shapes of regions shown herein, for example, to include a change in shape results in manufacturing. The following embodiments may also be constituted by one or a combination thereof.

The contents of the present disclosure described below may have a variety of configurations and propose only a required configuration herein, but are not limited thereto.

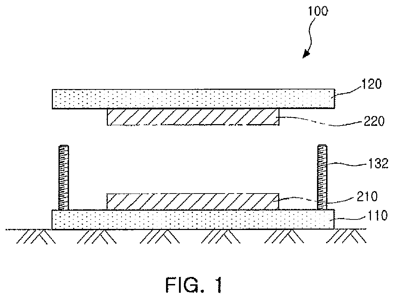

A sealing device for a secondary battery according to an exemplary embodiment will be described with reference to FIG. 1.

A sealing device for a secondary battery 100 according to an exemplary embodiment may include a plurality of pressing members. For example, the sealing device for a secondary battery 100 may include a first pressing member 110 and a second pressing member 120. However, the configuration of the sealing device for a secondary battery 100 is not limited to a pair of pressing members 110 and 120. For example, the sealing device for a secondary battery 100 may further include an actuator configured to actuate one or more pressing members 110 and 120.

The first pressing member 110 may be configured to support one or more sealing members. For example, a first sealing member 210 may be disposed on an upper surface of the first pressing member 110. The first pressing member 110 may be configured not to move during a sealing operation. For example, the first pressing member 110 may be continuously held in a predetermined position set before a sealing operation. The first pressing member 110 may be formed of a material having resistance to heat and pressure. For example, the first pressing member 110 may be formed of a metal material, or may be used using a material selected from materials having considerable strength and rigidity.

The second pressing member 120 may be configured to support one or more sealing members. For example, a second sealing member 220 may be disposed on a lower surface of the second pressing member 120. The second pressing member 120 may be configured to move during the sealing operation. For example, the second pressing member 120 may move downwardly toward the first pressing member 110 when the sealing operation starts. To this end, the second pressing member 120 may be connected to a separate actuator. The second pressing member 120 may be formed of a material resistant to heat and pressure. For example, the second pressing member 120 may be formed of a metal material or a material selected from other materials having considerable strength and rigidity.

The sealing device for a secondary battery 100 according to an exemplary embodiment may include a member adjusting a pressing height between the first pressing member 110 and the second pressing member 120, depending on the type of the secondary battery. For example, the sealing device for a secondary battery 100 may include a gap adjusting member 130.

The gap adjusting member 130 may include one or more protrusion members 132. For example, the gap adjusting member 130 may include a plurality of protrusion members 132 disposed at four corners of the first pressing member 110, respectively. The gap adjusting member 130 may be configured in such a manner that a position of the first pressing member 110 may be changed. For example, the protrusion member 132 of the gap adjusting member 130 may have the form of a bolt, and the first pressing member 110 may be engagedly combined with the protrusion member 132, having a bolt shape, in a screw-fastened manner. Thus, the first pressing member 110 may finely move in a vertical direction, depending on a degree of rotation of the protrusion member 132. The protrusion member 132 may be configured to contact the second pressing member 120. For example, an end of the protrusion member 132 may contact one surface of the second pressing member 120 in a pressed state formed as the second pressing member 120 moves downwardly.

In the case of the sealing device for a secondary battery 100, configured as described above, since a pressing interval between the first pressing member 110 and the second pressing member 120 may be finely adjusted by the gap adjusting member 130, a sealing quality of the secondary battery may be improved.

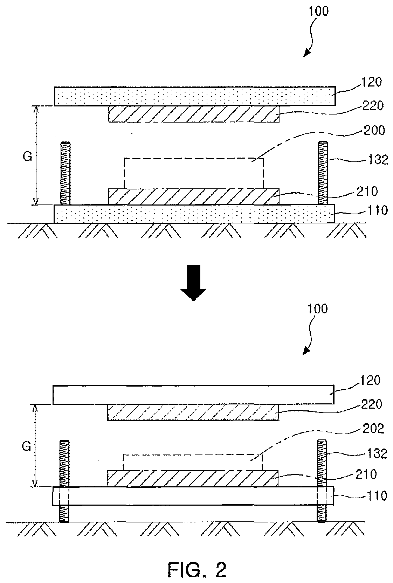

An example of using the sealing device for a secondary battery according to an exemplary embodiment will be described with reference to FIG. 2.

In the case of the sealing device for a secondary battery 100 according to the exemplary embodiment, a pressing interval between the first pressing member 110 and the second pressing member 120 may be adjusted, depending on thicknesses of secondary batteries 200 and 202. For example, when a sealing operation of the secondary battery 200 having a relatively great thickness is performed, most of the protrusion member 132 may be moved to an upper side of the first pressing member 120 as illustrated in an upper drawing of FIG. 2, such that a gap G between the first pressing member 110 and the second pressing member 120 in the pressed state may be increased.

Alternatively, for example, when a sealing operation of the secondary battery 202 having a relatively reduced thickness is performed, a portion of the protrusion member 132 may be moved below the first pressing member 120 as illustrated in a lower drawing of FIG. 2, such that the gap G between the first pressing member 110 and the second pressing member 120 in the pressed state may be reduced.

Thus, in the case of the sealing device for a secondary battery 100 according to the exemplary embodiment, as a protrusion height of the protrusion member 132 may be adjusted, the secondary batteries 200 and 202 having different thicknesses may be easily, quickly and accurately sealed.

Next, another exemplary embodiment will be described. In the following description of other embodiments, the same constituent elements as those of the foregoing embodiments are referred to using the same reference numerals, and thus, detailed descriptions thereof are omitted.

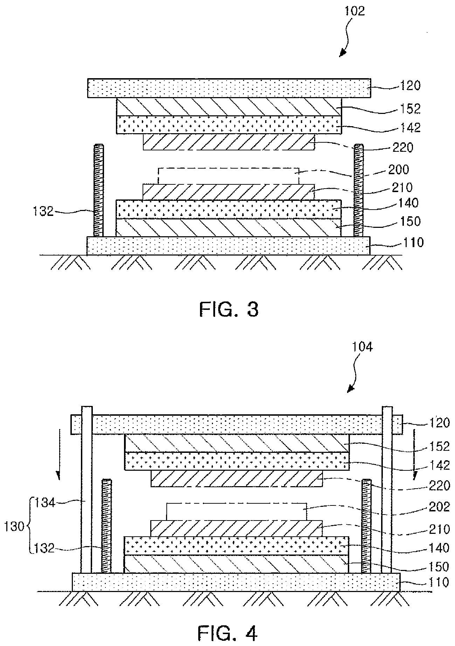

A sealing device for a secondary battery according to another embodiment will be described with reference to FIG. 3.

A sealing device for a secondary battery 102 according to another exemplary embodiment may further include heating units 140 and 142.

The heating units 140 and 142 are disposed on the first pressing member 110 and the second pressing member 120. However, the arrangement positions of the heating units 140 and 142 are not limited to the first pressing member 110 and the second pressing member 120. For example, the heating units 140 and 142 may only be disposed on the first pressing member 110 or the second pressing member 120. In addition, the heating units 140 and 142 may also be disposed in a third location, other than the first pressing member 110 and the second pressing member 120. For example, the heating units 140 and 142 may also be disposed on a circumference of the first pressing member 110 and the second pressing member 120.

The first heating unit 140 may be disposed on the first pressing member 110. In detail, the first heating unit 140 may be disposed on an upper portion of the first pressing member 110. However, the position of the first heating unit 140 is not limited to the upper portion of the first pressing member 110. For example, the first heating unit 140 may be disposed on a lower portion of the first pressing member 110 or on a side of the first pressing member 110, or may be embedded in the first pressing member 110.

The second heating unit 142 may be disposed on the second pressing member 120. In detail, the second heating unit 142 may be disposed on a lower portion of the second pressing member 120. However, the position of the second heating unit 142 is not limited to the lower portion of the second pressing member 120. For example, the second heating unit 142 may also be disposed on an upper portion of the second pressing member 120 or on a side of the second pressing member 120, or may be embedded in the second pressing member 120.

The heating units 140 and 142 configured as described above may apply heat to the first sealing member 210 and the second sealing member 220, respectively, to enable the first sealing member 210 and the second sealing member 220 to be bonded to each other.

The sealing device for a secondary battery 102 according to the exemplary embodiment may further include heat insulating members 150 and 152.

The heat insulating members 150 and 152 may be configured to significantly reduce external discharge of heat from the heating units 140 and 142. For example, a first heat insulating member 150 may be disposed between the first pressing member 110 and the first heating unit 140 to block heat emitted to a lower portion of the first pressing member 110, and a heat insulating member 152 may be disposed between the second pressing member 120 and the second heating unit 142 to block heat emitted to an upper portion of the second pressing member 120.

Since the heat insulating members 150 and 152 may prevent heat of the heating units 140 and 142 from being discharged externally, a bonding quality and bonding efficiency of the sealing members 210 and 220 may be increased by the heating units 140 and 142.

A sealing device for a secondary battery according to another embodiment will be described with reference to FIG. 4.

A sealing device for a secondary battery 104 according to an exemplary embodiment may be distinguished from those of the foregoing embodiments in terms of the configuration of a gap adjusting member 130. In detail, the gap adjusting member 130 according to the exemplary embodiment may include a protrusion member 132 and a guide member 134.

The guide member 134 may be configured to connect a first pressing member 110 and a second pressing member 120 to each other. For example, a plurality of guide members 134 may vertically extend from the first pressing member 110 and may penetrate through the second pressing member 120. The guide members 134 may be configured to guide the movement of the first pressing member 110 and the second pressing member 120. For example, the first pressing member 110 and the second pressing member 120 combined with the guide members 134 may move along the guide members 134 in a vertical direction.

In the case of the sealing device for a secondary battery 104 configured as described above, since upward and downward movement of the pressing members 110 and 120 may be guided by the guide member 134, a phenomenon in which pressing force by the pressing members 110 and 120 is applied to be biased to a portion of a secondary battery may be significantly reduced, and thus, the sealing quality of the secondary battery may be improved.

As set forth above, according to an example embodiment, since a gap between pressing members may be easily adjusted depending on the type of a secondary battery, the sealing quality of a secondary battery may be improved.

While exemplary embodiments have been shown and described above, it will be apparent to those skilled in the art that modifications and variations could be made without departing from the scope of the present invention as defined by the appended claims.

## Claims

1. A sealing device for a secondary battery comprising:
a first pressing member on which a first sealing member covering a first surface of a secondary battery is disposed;
a second pressing member on which a second sealing member covering a second surface of the secondary battery is disposed; and
a gap adjusting member disposed on one or more of the first pressing member and the second pressing member, and configured to adjust a distance between the first pressing member and the second pressing member.

2. The sealing device for a secondary battery of claim 1, further comprising a first heating unit disposed on the first pressing member.

3. The sealing device for a secondary battery of claim 2, further comprising a first heat insulating member disposed between the first pressing member and the first heating unit.

4. The sealing device for a secondary battery of claim 1, further comprising a second heating unit disposed on the second pressing member.

5. The sealing device for a secondary battery of claim 4, further comprising a second heat insulating member disposed between the second pressing member and the second heating unit.

6. The sealing device for a secondary battery of claim 1, wherein the gap adjusting member comprises a protrusion member configured to penetrate through the first pressing member to contact a surface of the second pressing member.

7. The sealing device for a secondary battery of claim 6, wherein the protrusion member has the form of a bolt to be engagedly combined with the first pressing member in a screw-fastened manner.

8. The sealing device for a secondary battery of claim 1, wherein the gap adjusting member further comprises a guide member penetrating through the second pressing member to guide relative movement of the second pressing member with respect to the first pressing member.
